(19) Europäisches Patentamt
European Patent Office
Office européen des brevets

(11) **EP 4 585 956 A1**

(12) **EUROPEAN PATENT APPLICATION**
published in accordance with Art. 153(4) EPC

(43) Date of publication:
**16.07.2025 Bulletin 2025/29**

(21) Application number: **22967729.9**

(22) Date of filing: **05.12.2022**

(51) International Patent Classification (IPC):
**G01S 3/20** (2006.01)   **G01S 3/46** (2006.01)
**H04B 17/27** (2015.01)

(52) Cooperative Patent Classification (CPC):
**G01S 3/20; G01S 3/46; H04B 17/27**

(86) International application number:
**PCT/JP2022/044645**

(87) International publication number:
**WO 2024/121875 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **TAKAHASHI, Yoshiki**
  **Tokyo 100-8310 (JP)**
• **TAKAHASHI, Ryuhei**
  **Tokyo 100-8310 (JP)**
• **KAGEME, Satoshi**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **WAVE SOURCE PRESENCE DIRECTION ESTIMATION DEVICE AND WAVE SOURCE PRESENCE DIRECTION ESTIMATION METHOD**

(57)    A wave source location direction estimation apparatus (3) includes: a signal acquisition unit (21) to acquire a reception signal of one or more radio waves from an antenna (11) to receive the one or more radio waves from among a direct wave which is a radio wave from a wave source (1) and one or more multipath waves which are radio waves from the wave source (1); and a profile calculation unit (22) to calculate an angle profile including directions of incidence of the respective radio waves on the antenna (11), and reception power levels of the respective radio waves on the basis of the reception signal acquired by the signal acquisition unit (21). In addition, the wave source location direction estimation apparatus (3) includes a direction estimation unit (23) to estimate a direction in which the wave source (1) is located on the basis of the angle profile calculated by the profile calculation unit (22).

FIG. 2

**Description**

TECHNICAL FIELD

The present disclosure relates to a wave source location direction estimation apparatus and a wave source location direction estimation method.

BACKGROUND ART

There are wave source location direction estimation apparatuses that can estimate the direction in which a wave source to emit radio waves is located even in an environment where, because structures are located around the wave source, radio waves emitted from the wave source are reflected by the structures.

As such a wave source location direction estimation apparatus, Non-Patent Literature 1 discloses a direction estimation system including N unmanned aerial vehicles (UAVs: Unmanned Aerial Vehicles) on which antennas to receive both direct waves which are radio waves from a wave source and multipath waves which are radio waves from the wave source are mounted. N is an integer which is equal to or greater than two.

Each of the UAVs estimates the direction in which the wave source is located on the basis of reception signals of radio waves output from the antenna. It should be noted that the direction estimated by an UAV is different from the direction in which the wave source is located due to the influence of multipath waves in some cases. In order to enhance direction estimation precision, the direction estimation system further estimates the direction in which the wave source is located on the basis of the directions estimated by the N UAVs.

CITATION LIST

NON-PATENT LITERATURE

Non-Patent Literature 1: Shinichi MURATA, Takahiro MATSUDA, and Kentaro NISHIMORI, "Maximum Likelihood Estimation for Single Wave Source Localization Using Multiple UAVs in NLOS Environments," March 2022, The Institute of Electronics, Information and Communication Engineers, The IEICE Transactions B Vol. J105-B No. 3 p. 220-239

SUMMARY OF INVENTION

TECHNICAL PROBLEM

There is a problem with the direction estimation system disclosed in Non-Patent Literature 1 that the direction estimation system needs to include the N antenna-mounted UAVs in order to estimate the direction in which a wave source is located.

The present disclosure has been made to solve the problem described above, and an object thereof is to obtain a wave source location direction estimation apparatus that can estimate the direction in which a wave source is located on the basis of a reception signal of one antenna.

SOLUTION TO PROBLEM

A wave source location direction estimation apparatus according to the present disclosure includes: a signal acquisition unit to acquire a reception signal of one or more radio waves from an antenna to receive the one or more radio waves from among a direct wave which is a radio wave from a wave source and one or more multipath waves which are radio waves from the wave source; and a profile calculation unit to calculate an angle profile including directions of incidence of the respective radio waves on the antenna, and reception power levels of the respective radio waves on the basis of the reception signal acquired by the signal acquisition unit. In addition, the wave source location direction estimation apparatus includes a direction estimation unit to estimate a direction in which the wave source is located on the basis of the angle profile calculated by the profile calculation unit.

ADVANTAGEOUS EFFECTS OF INVENTION

The present disclosure enables estimation of the direction in which a wave source is located on the basis of a reception signal of one antenna.

BRIEF DESCRIPTION OF DRAWINGS

FIG. 1 is an explanatory diagram illustrating the positional relationship among a wave source 1 which is the target of location direction estimation, structures 2, and a wave source location direction estimation apparatus 3.

FIG. 2 is a configuration diagram illustrating the wave source location direction estimation apparatus 3 according to a first embodiment.

FIG. 3 is a hardware configuration diagram illustrating hardware of the wave source location direction estimation apparatus 3 according to the first embodiment.

FIG. 4 is a hardware configuration diagram of a computer in a case where the wave source location direction estimation apparatus 3 is implemented using software, firmware, or the like.

FIG. 5 is a flowchart illustrating a wave source location direction estimation method which is a processing procedure performed by the wave source location direction estimation apparatus 3.

FIG. 6 is an explanatory diagram illustrating a distribution function $f(\phi)$ in a case where the difference between an angle profile $\phi$ and a probability distribution $a(\theta,\mu,\sigma^2)$ (or $a(\theta,\mu,\kappa)$) is large, and the distribution function $f(\phi)$ in a case where the difference between the angle profile $\phi$ and the probability distribution $a(\theta,\mu,\sigma^2)$ (or $a(\theta,\mu,\kappa)$) is the minimum.

FIG. 7 is an explanatory diagram illustrating the angle profile $\phi$ and the probability distribution $a(\theta,\mu,\sigma^2)$.

FIG. 8 is a configuration diagram illustrating a wave source location direction estimation apparatus 3 according to a second embodiment.

FIG. 9 is a hardware configuration diagram illustrating hardware of the wave source location direction estimation apparatus 3 according to the second embodiment.

FIG. 10 is an explanatory diagram illustrating an angle profile $\phi_m$ and a probability distribution $a_m(\theta_m,\mu_m,\sigma_m^2)$.

FIG. 11 is a configuration diagram illustrating a wave source location direction estimation apparatus 3 according to a third embodiment.

FIG. 12 is a hardware configuration diagram illustrating hardware of the wave source location direction estimation apparatus 3 according to the third embodiment.

FIG. 13 is an explanatory diagram illustrating the propagation path of a direct wave and the propagation path of a multipath wave.

FIG. 14 is an explanatory diagram illustrating the propagation paths of two multipath waves.

FIG. 15 is a configuration diagram illustrating a wave source location direction estimation apparatus 3 according to a fourth embodiment.

FIG. 16 is a hardware configuration diagram illustrating hardware of the wave source location direction estimation apparatus 3 according to the fourth embodiment.

DESCRIPTION OF EMBODIMENTS

Hereinafter, modes for implementing the present disclosure are explained with reference to the attached drawings in order to explain the present disclosure in more detail.

First Embodiment.

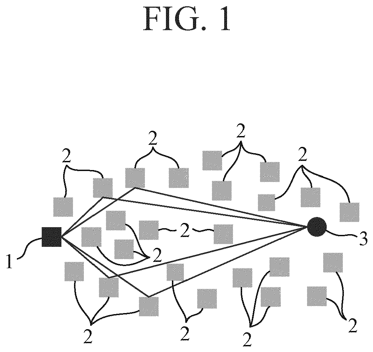

FIG. 1 is an explanatory diagram illustrating the positional relationship among a wave source 1 which is the target of location direction estimation, structures 2, and a wave source location direction estimation apparatus 3.

In FIG. 1, the wave source 1 is a radio wave emission source, and is the target of location direction estimation performed by the wave source location direction estimation apparatus 3.

The structures 2 are objects that reflect radio waves emitted from the wave source 1. Examples of the structures 2 include buildings or walls.

The wave source location direction estimation apparatus 3 is an apparatus to estimate the direction in which the wave source 1 is located.

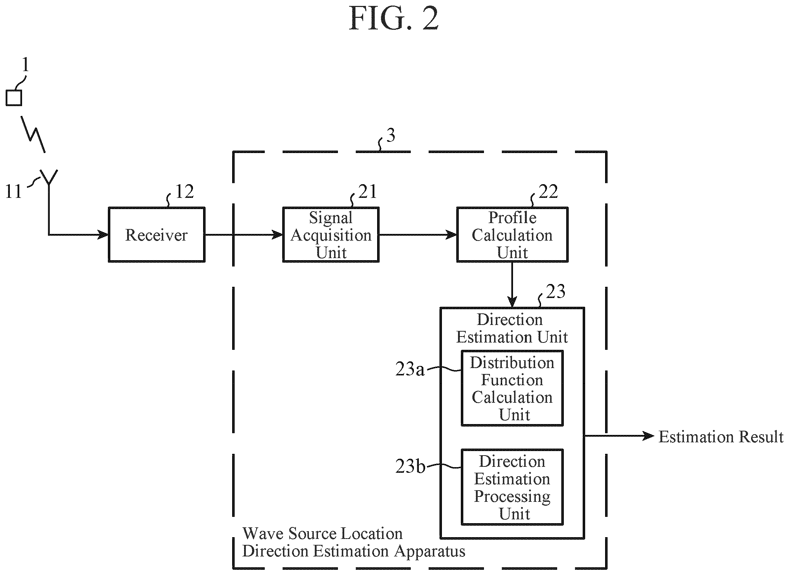

FIG. 2 is a configuration diagram illustrating the wave source location direction estimation apparatus 3 according to a first embodiment. Illustrations of the structure 2 are omitted regarding the wave source location direction estimation apparatus 3 illustrated in FIG. 2.

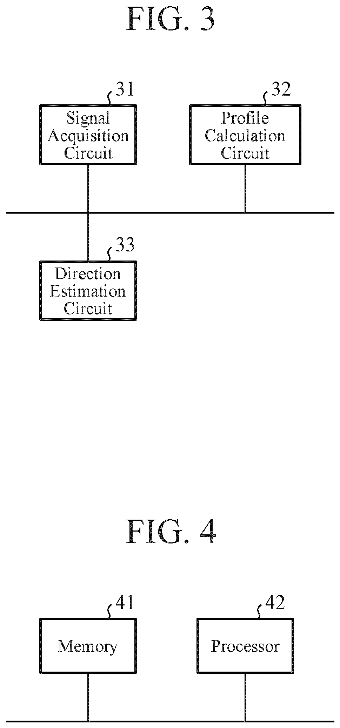

FIG. 3 is a hardware configuration diagram illustrating hardware of the wave source location direction estimation apparatus 3 according to the first embodiment. For example, an antenna 11 is an array antenna having a plurality of antenna elements.

The antenna 11 receives one or more radio waves from among a direct wave which is a radio wave from the wave source 1 and one or more multipath waves which are radio waves from the wave source 1.

The antenna 11 outputs a reception signal of one or more radio waves to a receiver 12.

The direct wave from the wave source 1 is a radio wave having reached the antenna 11 without being reflected by the structures 2 after being emitted from the wave source 1. The multipath waves from the wave source 1 are radio waves having been reflected by the structures 2 after being emitted from the wave source 1, and thereafter having reached the antenna 11. As illustrated in FIG. 1, the number of the multipath waves is not limited to one, but is greater than one in some cases.

The receiver 12 demodulates the reception signal output from the antenna 11, and converts the demodulated reception signal, which is an analog signal, into a digital signal (hereinafter, referred to as "reception data").

The receiver 12 outputs the reception data to the wave source location direction estimation apparatus 3.

The wave source location direction estimation apparatus 3 includes a signal acquisition unit 21, a profile calculation unit 22, and a direction estimation unit 23.

For example, the signal acquisition unit 21 is implemented using a signal acquisition circuit 31 illustrated in FIG. 3.

The signal acquisition unit 21 acquires the reception data from the receiver 12 as the reception signal from the antenna 11.

The signal acquisition unit 21 outputs the reception data to the profile calculation unit 22.

For example, the profile calculation unit 22 is implemented using a profile calculation circuit 32 illustrated in FIG. 3.

The profile calculation unit 22 acquires the reception data from the signal acquisition unit 21.

On the basis of the reception data, the profile calculation unit 22 calculates an angle profile including the directions of incidence of the respective radio waves on the antenna 11, and the reception power levels of the respective radio waves.

For example, assuming that an angle representing the front direction of the antenna 11 is 0 degrees, the direction of incidence of a radio wave that is incident on the antenna 11 from a direction inclined by an angle $\theta$ in the clockwise direction from the front direction is $+\theta$. In addition, the direction of incidence of a radio wave that is incident on the antenna 11 from a direction inclined by an angle $\theta$ in the counterclockwise direction from the front direction is $-\theta$.

The profile calculation unit 22 outputs the angle profile to the direction estimation unit 23.

For example, the direction estimation unit 23 is implemented using a direction estimation circuit 33 illustrated in FIG. 3.

The direction estimation unit 23 includes a distribution function calculation unit 23a and a direction estimation processing unit 23b.

The direction estimation unit 23 acquires the angle profile from the profile calculation unit 22.

On the basis of the angle profile, the direction estimation unit 23 estimates the direction in which the wave source 1 is located.

The direction estimation unit 23 outputs a result of the estimation of the direction in which the wave source 1 is located to an external apparatus, for example.

The distribution function calculation unit 23a acquires the angle profile from the profile calculation unit 22.

The distribution function calculation unit 23a calculates, as a distribution function corresponding to the angle profile, a distribution function representing the distribution of the reception power levels of the respective radio waves included in the angle profile in relation to the directions of incidence of the respective radio waves.

The direction estimation processing unit 23b identifies, as the direction in which the wave source 1 is located, the direction of incidence corresponding to the maximum value of the reception power levels in the distribution function calculated by the distribution function calculation unit 23a.

It is assumed in FIG. 2 that each of the signal acquisition unit 21, the profile calculation unit 22, and the direction estimation unit 23 which are constituent elements of the wave source location direction estimation apparatus 3 is implemented using dedicated hardware illustrated in FIG. 3. That is, it is assumed that the wave source location direction estimation apparatus 3 is implemented using the signal acquisition circuit 31, the profile calculation circuit 32, and the direction estimation circuit 33.

Each of the signal acquisition circuit 31, the profile calculation circuit 32, and the direction estimation circuit 33 is equivalent to, for example, a single circuit, a composite circuit, a programmed processor, a parallel-programmed processor, an Application Specific Integrated Circuit (ASIC), a Field-Programmable Gate Array (FPGA), or a combination of these.

The constituent elements of the wave source location direction estimation apparatus 3 are not limited to those implemented using dedicated hardware, but the wave source location direction estimation apparatus 3 may be implemented using software, firmware, or a combination of software and firmware.

Software or firmware is stored as a program on a memory of a computer. The computer means hardware to execute programs, and is a Central Processing Unit (CPU), a Graphics Processing Unit (GPU), a central processor, a processing apparatus, an arithmetic operation apparatus, a microprocessor, a microcomputer, a processor, or a Digital Signal Processor (DSP), for example.

FIG. 4 is a hardware configuration diagram of a computer in a case where the wave source location direction estimation apparatus 3 is implemented using software, firmware, or the like.

In a case where the wave source location direction estimation apparatus 3 is implemented using software, firmware, or the like, a program for causing a computer to execute a processing procedure performed in each of the signal acquisition unit 21, the profile calculation unit 22, and the direction estimation unit 23 is stored on a memory 41. Then, a processor 42 of the computer executes the programs stored on the memory 41.

In addition, FIG. 3 illustrates an example in which each of the constituent elements of the wave source location direction estimation apparatus 3 is implemented using dedicated hardware, and FIG. 4 illustrates an example in which the wave source location direction estimation apparatus 3 is implemented using software, firmware, or the like. However, these are merely examples. Some constituent elements of the wave source location direction estimation apparatus 3 may be implemented using dedicated hardware, and the remaining constituent elements may be implemented using software, firmware, or the like.

Next, an operation performed by the wave source location direction estimation apparatus 3 illustrated in FIG. 2 is explained.

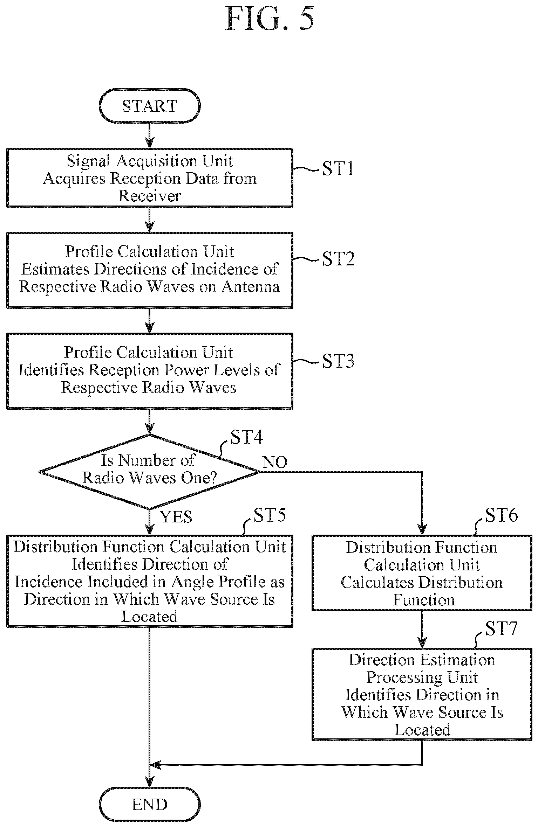

FIG. 5 is a flowchart illustrating a wave source location direction estimation method which is a processing procedure performed by the wave source location direction estimation apparatus 3.

Radio waves emitted from the wave source 1 reach the antenna 11 as direct waves without being reflected by the structures 2 in some cases, and, in addition to this, reach the antenna 11 as multipath waves by being reflected by the structures 2 in some cases.

The antenna 11 receives a direct waves in a case where the direct wave from the wave source 1 comes, and receives a multipath wave in a case where the multipath wave from the wave source 1 comes. The number of multipath waves received by the antenna 11 is not limited to one, but is greater than one in some cases.

In addition, the antenna 11 receives a direct wave and a multipath wave in a case where the direct wave and the multipath wave come.

The antenna 11 outputs a reception signal of one or more radio waves to the receiver 12.

The receiver 12 demodulates the reception signal output from the antenna 11, and converts the demodulated reception signal, which is an analog signal, into reception data, which is a digital signal.

The receiver 12 outputs the reception data to the wave source location direction estimation apparatus 3.

The signal acquisition unit 21 of the wave source location direction estimation apparatus 3 acquires the reception data from the receiver 12 (Step ST1 in FIG. 5).

The signal acquisition unit 21 outputs the reception data to the profile calculation unit 22.

The profile calculation unit 22 acquires the reception data from the signal acquisition unit 21.

On the basis of the reception data, the profile calculation unit 22 estimates the directions of incidence $\theta_k$ of the respective radio waves on the antenna 11 (Step ST2 in FIG. 5). $k = 1, \cdots, K$, and K is an integer equal to or greater than one.

In a case where a direct wave has been received by the antenna 11, the profile calculation unit 22 estimates the direction of incidence of the direct wave on the antenna 11. In a case where one or more multipath waves have been received by the antenna 11, the profile calculation unit 22 estimates the directions of incidence of the respective multipath waves on the antenna 11.

The profile calculation unit 22 can use a known direction estimation algorithm as an algorithm for estimating the directions of incidence $\theta_k$ of the radio waves. For example, known direction estimation algorithms include beamformer methods, the Capon method, the MUSIC method, and the FISTA method.

The profile calculation unit 22 identifies, as the reception power levels $P_k$ of the respective radio waves, the signal strengths of the respective radio waves in the directions of incidence $\theta_k$ (Step ST3 in FIG. 5). Since a process of identifying the signal strengths in the directions of incidence $\theta_k$ itself is a known technology, detailed explanation thereof is omitted.

As represented by the following Formula (1), the profile calculation unit 22 outputs, to the direction estimation unit 23, an angle profile $\phi$ including the directions of incidence $\theta_k$ ($k = 1, \cdots, K$) of the respective radio waves and the reception power levels $P_k$ of the respective radio waves.

$$\phi = f(\theta_1, \cdots, \theta_K, P_1, \cdots, P_K) \quad (1)$$

The distribution function calculation unit 23a of the direction estimation unit 23 acquires the angle profile $\phi$ from the profile calculation unit 22.

In a case where the number of the directions of incidence $\theta_k$ included in the angle profile $\phi$ is one because the number of radio waves received by the antenna 11 is one (in a case of Step ST4: YES in FIG. 5), the distribution function calculation unit 23a identifies a direction of incidence $\theta_1$ included in the angle profile $\phi$ as the direction in which the wave source 1 is located (Step ST5 in FIG. 5).

In a case where the number of the directions of incidence $\theta_k$ included in the angle profile $\phi$ is greater than one because the number of radio waves received by the antenna 11 is greater than one (in a case of Step ST4: NO in FIG. 5), the distribution function calculation unit 23a calculates, as the distribution function $f(\phi)$ corresponding to the angle profile $\phi$, a distribution function $f(\phi)$ representing the distribution of the reception power levels $P_k$ of the respective radio waves included in the angle profile $\phi$ in relation to the directions of incidence $\theta_k$ of the respective radio waves (Step ST6 in FIG. 5).

As the distribution of the reception power levels $P_k$ represented by the distribution function $f(\phi)$, for example, a normal distribution $p_N(\theta;\mu,\sigma^2)$ represented by the following Formula (2), a Laplace distribution $p_L(\theta;\mu,\sigma^2)$ represented by the following Formula (3), or a von Mises distribution $p_V(\theta;\mu,\kappa)$ represented by the following Formula (4) can be used. $\theta = \theta_1, \cdots, \theta_K$.

$$p_N(\theta;\mu,\sigma^2) = \frac{1}{\sqrt{2\pi\sigma^2}} \exp\left(-\frac{(\theta - \mu)^2}{2\sigma^2}\right) \qquad (2)$$

$$p_L(\theta;\mu,\sigma^2) = \frac{1}{2\sqrt{0.5\sigma^2}} \exp\left(-\frac{|\theta - \mu|}{\sqrt{0.5\sigma^2}}\right) \qquad (3)$$

$$p_V(\theta;\mu,\kappa) = \frac{1}{2\pi I_0(\kappa)} \exp(\kappa \cos(\theta - \mu)) \qquad (4)$$

In Formulae (2) to (4), $\mu$ is a direction of incidence at which the reception power levels of the distribution function $f(\phi)$ assume the maximum value, $\sigma^2$ is the variance of the reception power levels corresponding to the directions of incidence, and $\kappa$ is the degree of concentration of the reception power levels corresponding to the directions of incidence.

The distribution function calculation unit 23a calculates, from the distribution function $f(\phi)$, either a probability distribution $a(\theta,\mu,\sigma^2)$ or a probability distribution $a(\theta,\mu,\kappa)$ representing the respective presence probabilities of a plurality of radio waves whose directions of incidence on the antenna 11 are mutually different.

In a case where the distribution of the reception power levels $P_k$ represented by the distribution function $f(\phi)$ is the normal distribution $p_N(\theta;\mu,\sigma^2)$, the probability distribution $a(\theta,\mu,\sigma^2)$ is represented by the following Formula (5).

In a case where the distribution of the reception power levels $P_k$ represented by the distribution function $f(\phi)$ is the Laplace distribution $p_L(\theta;\mu,\sigma^2)$, the probability distribution $a(\theta,\mu,\sigma^2)$ is represented by the following Formula (6).

In addition, in a case where the distribution of the reception power levels $P_k$ represented by the distribution function $f(\phi)$ is the von Mises distribution $p_V(\theta;\mu,\kappa)$, the probability distribution $a(\theta,\mu,\kappa)$ is represented by the following Formula (7).

It is premised here that the distribution of the reception power levels $P_k$ represented by the distribution function $f(\phi)$ is the normal distribution $p_N(\theta;\mu,\sigma^2)$ or the like. Although the distribution of the reception power levels $P_k$ does not necessarily match the normal distribution $p_N(\theta;\mu,\sigma^2)$ or the like strictly depending on the condition of the arrangement of the structures 2, statistically, the distribution of the reception power levels $P_k$ generally matches the normal distribution $p_N(\theta;\mu,\sigma^2)$ or the like. In a case where the distribution of the reception power levels $P_k$ generally matches the normal distribution $p_N(\theta;\mu,\sigma^2)$ or the like, a direction of incidence can be identified as illustrated below.

$$a(\boldsymbol{\theta},\mu,\sigma^2) = f([p_N(\theta_1;\mu,\sigma^2) \quad \cdots \quad p_N(\theta_K;\mu,\sigma^2)]^T) \qquad (5)$$

$$a(\theta,\mu,\sigma^2) = f([p_L(\theta_1;\mu,\sigma^2) \quad \cdots \quad p_L(\theta_K;\mu,\sigma^2)]^T) \qquad (6)$$

$$a(\theta,\mu,\kappa) = f([p_V(\theta_1;\mu,\kappa) \quad \cdots \quad p_V(\theta_K;\mu,\kappa)]^T) \qquad (7)$$

The direction estimation processing unit 23b identifies, as the direction in which the wave source 1 is located, the direction of incidence corresponding to the maximum value of the presence probabilities in the probability distribution $a(\theta,\mu,\sigma^2)$ or the probability distribution $a(\theta,\mu,\kappa)$ calculated by the distribution function calculation unit 23a (Step ST7 in FIG. 5).

Hereinafter, a process of identifying a location direction performed by the direction estimation processing unit 23b is explained specifically.

In a case where the distribution of the reception power levels $P_k$ represented by the distribution function $f(\phi)$ is the normal distribution $p_N(\theta;\mu,\sigma^2)$ or the Laplace distribution $p_L(\theta;\mu,\sigma^2)$, the direction estimation processing unit 23b searches for a combination of $\mu$ and $\sigma^2$ that minimizes the difference between the angle profile $\phi$ and the probability distribution $a(\theta,\mu,\sigma^2)$ as represented by the following Formula (8).

In a case where the distribution of the reception power levels $P_k$ represented by the distribution function $f(\phi)$ is the von Mises distribution $p_V(\theta;\mu,\kappa)$, the direction estimation processing unit 23b searches for a combination of $\mu$ and $\kappa$ that minimizes the difference between the angle profile $\phi$ and the probability distribution $a(\theta,\mu,\kappa)$ as represented by the following Formula (9).

$$\min_{\mu,\sigma^2}\|a(\boldsymbol{\theta},\mu,\sigma^2)-\boldsymbol{\phi}\|_2^2 \qquad (8)$$

$$\min_{\mu,\kappa}\|a(\boldsymbol{\theta},\mu,\kappa)-\boldsymbol{\phi}\|_2^2 \qquad (9)$$

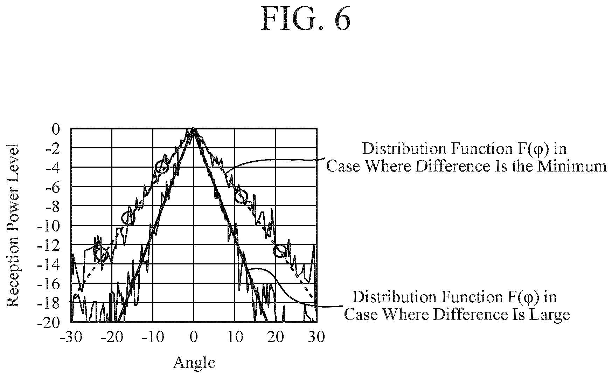

FIG. 6 is an explanatory diagram illustrating the distribution function $f(\phi)$ in a case where the difference between the angle profile $\phi$ and the probability distribution $a(\theta,\mu,\sigma^2)$ (or $a(\theta,\mu,\kappa)$) is large, and the distribution function $f(\phi)$ in a case where the difference between the angle profile $\phi$ and the probability distribution $a(\theta,\mu,\sigma^2)$ (or $a(\theta,\mu,\kappa)$) is the minimum.

In FIG. 6, the horizontal axis represents angles representing the directions of incidence of radio waves, and the vertical axis represents the reception power levels of the radio waves.

O represents the reception power levels and angles representing the directions of incidence of the respective radio waves.

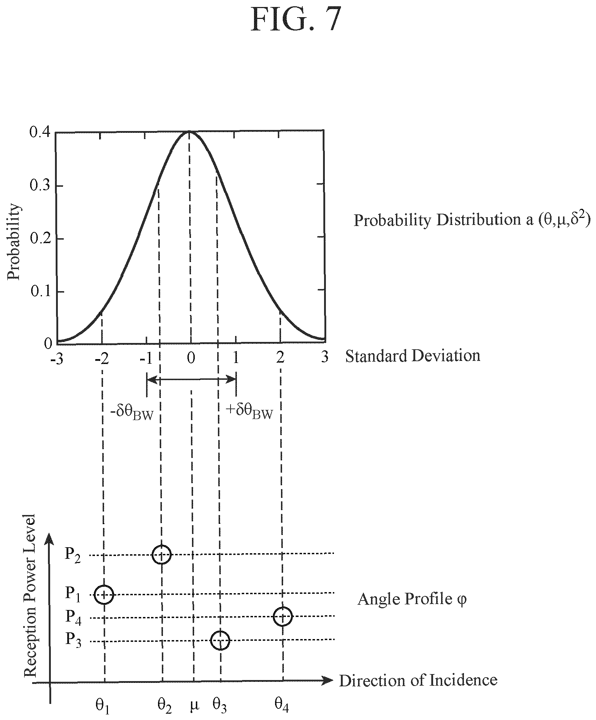

FIG. 7 is an explanatory diagram illustrating the angle profile $\phi$ and the probability distribution $a(\theta,\mu,\sigma^2)$.

The horizontal axis of the probability distribution $a(\theta,\mu,\sigma^2)$ illustrated in FIG. 7 represents the standard deviations of directions of incidence, and the vertical axis of the probability distribution $a(\theta,\mu,\sigma^2)$ represents probabilities.

$\theta_1$ represents a direction of incidence whose standard deviation is lower by 2 than the standard deviation of a direction of incidence $\mu$ whose presence probability is the maximum value. $\theta_2$ represents a direction of incidence whose standard deviation is lower by 0.7 than the standard deviation of the direction of incidence $\mu$.

$\theta_3$ represents a direction of incidence whose standard deviation is higher by 0.6 than the standard deviation of the direction of incidence $\mu$. $\theta_4$ represents a direction of incidence whose standard deviation is higher by 2 than the standard deviation of the direction of incidence $\mu$.

By searching for a combination of $\mu$ and $\sigma^2$ that minimizes the difference between the angle profile $\phi$ and the probability distribution $a(\theta,\mu,\sigma^2)$, the direction estimation processing unit 23b identifies, as the direction in which the wave source 1 is located, the direction of incidence $\theta$ corresponding to the maximum value of the presence probabilities in the probability distribution $a(\theta,\mu,\sigma^2)$ related to combinations of $\mu$ and $\sigma^2$. The direction of incidence $\theta$ corresponding to the maximum value is $\mu$.

By searching for a combination of $\mu$ and $\kappa$ that minimizes the difference between the angle profile $\phi$ and the probability distribution $a(\theta,\mu,\kappa)$, the direction estimation processing unit 23b identifies, as the direction in which the wave source 1 is located, the direction of incidence $\theta$ corresponding to the maximum value of the presence probabilities in the probability distribution $a(\theta,\mu,\kappa)$ related to combinations of $\mu$ and $\kappa$. The direction of incidence $\theta$ corresponding to the maximum value is $\mu$. It is assumed here that the direction in which the wave source 1 is located is the direction of incidence $\theta$ corresponding to the maximum value. The direction in which the wave source 1 is located is not strictly limited to the direction of incidence $\theta$ corresponding to the maximum value, but, as long as there are no practical problems, the direction in which the wave source 1 is located may be the direction of incidence $\theta$ corresponding to a value smaller than the maximum value.

As a result of estimation of the direction in which the wave source 1 is located, the direction estimation processing unit 23b outputs the direction of incidence $\mu$ corresponding to the maximum value or the direction of incidence $\theta_1$, which is the direction identified by the distribution function calculation unit 23a, to an external apparatus, for example.

In the first embodiment described above, the wave source location direction estimation apparatus 3 includes: the signal acquisition unit 21 to acquire a reception signal of one or more radio waves from the antenna 11 to receive the one or more radio waves from among a direct wave which is a radio wave from the wave source 1 and one or more multipath waves which are radio waves from the wave source 1; and the profile calculation unit 22 to calculate an angle profile including the directions of incidence of the respective radio waves on the antenna 11, and the reception power levels of the respective radio waves on the basis of the reception signal acquired by the signal acquisition unit 21. In addition, the wave source location direction estimation apparatus 3 includes the direction estimation unit 23 to estimate the direction in which the wave source 1 is located on the basis of the angle profile calculated by the profile calculation unit 22. Accordingly, the wave source location direction estimation apparatus 3 can estimate the direction in which the wave source 1 is located on the basis of a reception signal of the one antenna 11.

In the wave source location direction estimation apparatus 3 illustrated in FIG. 2, the direction estimation processing unit 23b identifies, as the direction in which the wave source 1 is located, the direction of incidence $\mu$ corresponding to the maximum value of presence probabilities in the probability distribution $a(\theta,\mu,\sigma^2)$ or the probability distribution $a(\theta,\mu,\kappa)$ calculated by the distribution function calculation unit 23a.

However, this is merely an example. As represented by the following Formula (10), the distribution function calculation unit 23a may normalize a direction of incidence $\mu$ using the beam width $\theta_{BW}$ of a radio wave, and output a normalized angle $\mu'$ as a result of estimation of the direction in which the wave source 1 is located to an external apparatus, for example.

$$\mu' = \delta\theta_{BW}\mu \qquad\qquad (10)$$

In Formula (10), $\delta$ is a normalization constant that is set relative to the beam width $\theta_{BW}$.

Second Embodiment.

In a wave source location direction estimation apparatus 3 explained in a second embodiment, a direction estimation unit 24 calculates M normalized angle profiles $\phi 1$ to $\phi_M$ from an angle profile $\phi$ calculated by a profile calculation unit 22 by normalizing the reception power levels of respective radio waves included in the angle profile $\phi$ using each of M mutually different power levels $G_1$ to $G_M$. M is an integer which is equal to or greater than two.

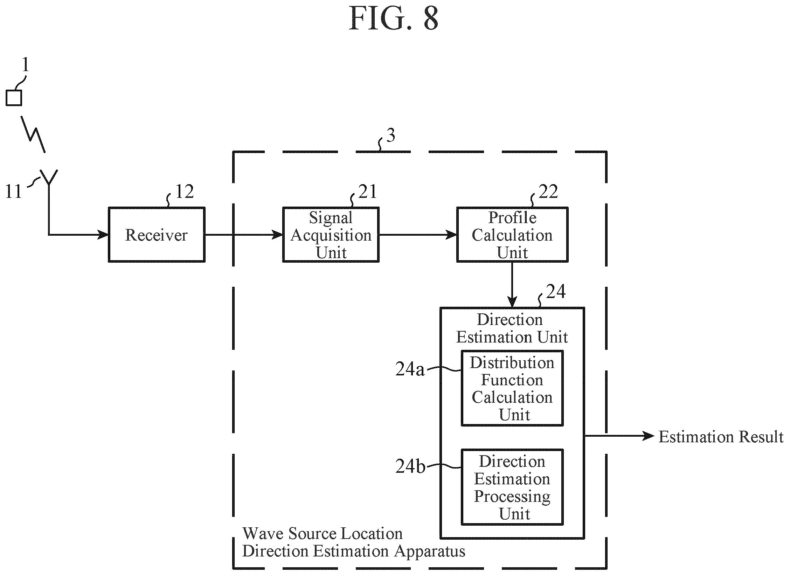

FIG. 8 is a configuration diagram illustrating the wave source location direction estimation apparatus 3 according to the second embodiment. Reference signs in FIG. 8 that are identical to those in FIG. 2 denote identical or equivalent portions, and accordingly detailed explanation thereof is omitted.

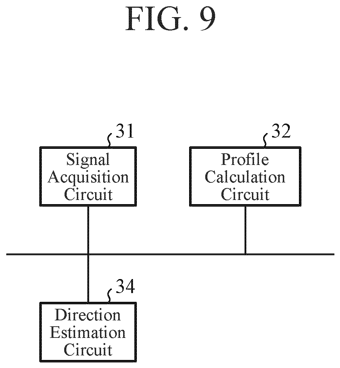

FIG. 9 is a hardware configuration diagram illustrating hardware of the wave source location direction estimation apparatus 3 according to the second embodiment. Reference signs in FIG. 9 that are identical to those in FIG. 3 denote identical or equivalent portions, and accordingly detailed explanation thereof is omitted.

The wave source location direction estimation apparatus 3 illustrated in FIG. 8 includes a signal acquisition unit 21, the profile calculation unit 22, and the direction estimation unit 24.

For example, the direction estimation unit 24 is implemented using a direction estimation circuit 34 illustrated in FIG. 9.

The direction estimation unit 24 includes a distribution function calculation unit 24a and a direction estimation processing unit 24b.

The direction estimation unit 24 acquires the angle profile $\phi$ from the profile calculation unit 22.

On the basis of the angle profile $\phi$, the direction estimation unit 24 estimates the direction in which a wave source 1 is located.

The direction estimation unit 24 outputs a result of the estimation of the direction in which the wave source 1 is located to an external apparatus, for example.

The distribution function calculation unit 24a acquires the angle profile $\phi$ from the profile calculation unit 22.

The distribution function calculation unit 24a calculates the M normalized angle profiles $\phi 1$ to $\phi_M$ from the angle profile $\phi$ by normalizing the reception power levels of the respective radio waves included in the angle profile $\phi$ using each of the M mutually different power levels $G_1$ to $G_M$.

The distribution function calculation unit 24a calculates a distribution function $f_m(\phi)$ representing the distribution of the reception power levels of the respective radio waves included in each normalized angle profile $\phi_m$ in relation to the directions of incidence of the respective radio waves. $m = 1, \cdots, M$.

The distribution function calculation unit 24a calculates, from the distribution function $f_m(\phi)$, a probability distribution $a_m(\theta_m,\mu_m,\sigma_m^2)$ or a probability distribution $a_m(\theta_m,\mu_m,\kappa_m)$ representing the respective presence probabilities of a plurality of radio waves whose directions of incidence on an antenna 11 are mutually different.

The direction estimation processing unit 24b identifies the direction of incidence $\theta_m$ corresponding to the maximum value of the presence probabilities in the probability distribution $a_m(\theta_m,\mu_m,\sigma_m^2)$ or the probability distribution $a_m(\theta_m,\mu_m,\kappa_m)$ calculated by the distribution function calculation unit 24a.

The direction estimation processing unit 24b selects any one of the M identified directions of incidence $\theta$ to $\theta_M$ as the direction in which the wave source is located.

It is assumed in FIG. 8 that each of the signal acquisition unit 21, the profile calculation unit 22, and the direction estimation unit 24 which are constituent elements of the wave source location direction estimation apparatus 3 is implemented using dedicated hardware illustrated in FIG. 9. That is, it is assumed that the wave source location direction estimation apparatus 3 is implemented using a signal acquisition circuit 31, a profile calculation circuit 32, and the direction estimation circuit 34.

For example, each of the signal acquisition circuit 31, the profile calculation circuit 32, and the direction estimation circuit 34 is equivalent to a single circuit, a composite circuit, a programmed processor, a parallel-programmed processor, an ASIC, an FPGA, or a combination of these.

The constituent elements of the wave source location direction estimation apparatus 3 are not limited to those implemented using dedicated hardware, but the wave source location direction estimation apparatus 3 may be implemented using software, firmware, or a combination of software and firmware.

In a case where the wave source location direction estimation apparatus 3 is implemented using software, firmware, or the like, a program for causing a computer to execute a processing procedure performed in each of the signal acquisition unit 21, the profile calculation unit 22, and the direction estimation unit 24 is stored on the memory 41 illustrated in FIG. 4. Then, the processor 42 illustrated in FIG. 4 executes the programs stored on the memory 41.

In addition, FIG. 9 illustrates an example in which each of the constituent elements of the wave source location direction estimation apparatus 3 is implemented using dedicated hardware, and FIG. 4 illustrates an example in which the wave source location direction estimation apparatus 3 is implemented using software, firmware, or the like. However, these are merely examples. Some constituent elements of the wave source location direction estimation apparatus 3 may be implemented using dedicated hardware, and the remaining constituent elements may be implemented using software, firmware, or the like.

Next, an operation performed by the wave source location direction estimation apparatus 3 illustrated in FIG. 8 is explained. It should be noted that since constituent elements other than the direction estimation unit 24 are similar to those of the wave source location direction estimation apparatus 3 illustrated in FIG. 2, only an operation performed by the direction estimation unit 24 is explained here.

The distribution function calculation unit 24a acquires the angle profile $\phi$ from the profile calculation unit 22.

Similarly to the distribution function calculation unit 23a illustrated in FIG. 2, the distribution function calculation unit 24a calculates, as the distribution function $f(\phi)$ corresponding to the angle profile $\phi$, a distribution function representing the distribution of the reception power levels of respective radio waves in relation to the directions of incidence of the respective radio waves.

As represented by the following Formula (11), the distribution function calculation unit 24a calculates the M normalized angle profiles $\phi 1$ to $\phi M$ from the angle profile $\phi$ by normalizing the reception power levels of respective radio waves included in the angle profile $\phi$ using each of the M mutually different power levels $G_1$ to $G_M$.

$$\varphi_m = \frac{\varphi}{G_m} \qquad (1\,1)$$

$$G_m = 10^{\frac{\alpha(m-1)}{10}} \qquad (1\,2)$$

In Formula (12), $\alpha$ is a step width, and is a known value of the distribution function calculation unit 24a.

The distribution function calculation unit 24a calculates a distribution function $f_m(\phi_m)$ (m = 1, $\cdots$, M) representing the distribution of the reception power levels of the respective radio waves included in each normalized angle profile $\phi_m$ in relation to the directions of incidence of the respective radio waves.

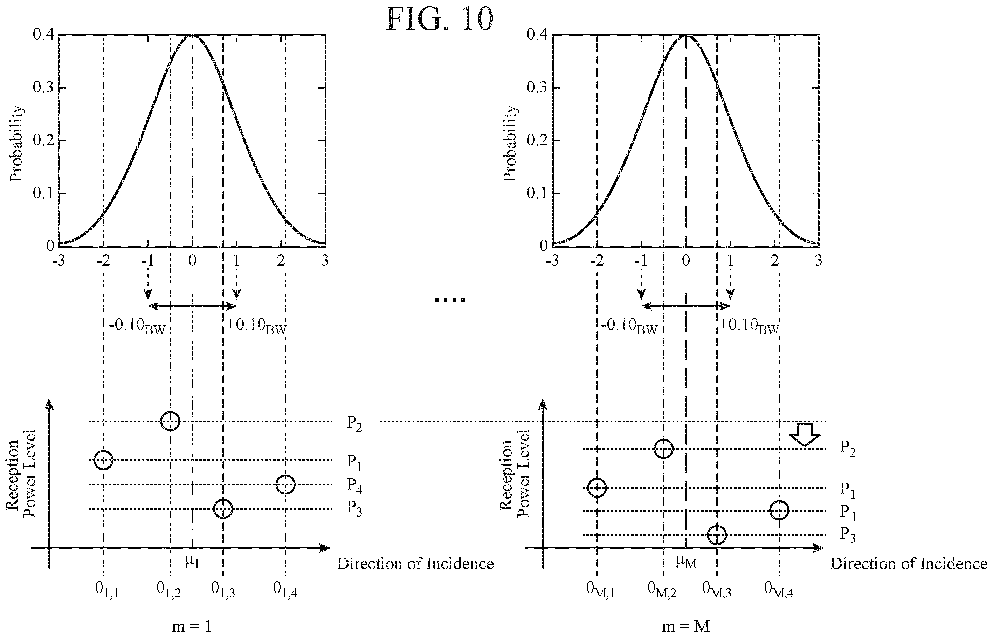

As illustrated in FIG. 10, the distribution function calculation unit 24a calculates, from the distribution function $f_m(\phi_m)$, the probability distribution $a_m(\theta_m,\mu_m,\sigma_m{}^2)$ or the probability distribution $a_m(\theta_m,\mu_m,\kappa_m)$ representing the respective presence probabilities of a plurality of radio waves whose directions of incidence on the antenna 11 are mutually different. The process of calculating the probability distributions performed by the distribution function calculation unit 24a itself is similar to the process of calculating the probability distributions performed by the distribution function calculation unit 23a.

The distribution function calculation unit 24a outputs the probability distribution $a_m(\theta_m,\mu_m,\sigma_m{}^2)$ or the probability distribution $a_m(\theta_m,\mu_m,\kappa_m)$ to the direction estimation processing unit 24b.

FIG. 10 is an explanatory diagram illustrating the angle profile $\phi_m$ and the probability distribution $a_m(\theta_m,\mu_m,\sigma_m{}^2)$.

The horizontal axis of the probability distribution $a_m(\theta_m,\mu_m,\sigma_m{}^2)$ illustrated in FIG. 10 represents the standard deviations of directions of incidence, and the vertical axis of the probability distribution $a_m(\theta_m,\mu_m,\sigma_m{}^2)$ represents probabilities.

$\theta_{m,1}$ represents a direction of incidence whose standard deviation is lower by 2 than the standard deviation of a direction of incidence $\mu_m$ whose presence probability is the maximum value. $\theta_{m,2}$ represents a direction of incidence whose standard deviation is lower by 0.5 than the standard deviation of the direction of incidence $\mu_m$.

$\theta_{m,3}$ represents a direction of incidence whose standard deviation is higher by 0.7 than the standard deviation of the direction of incidence $\mu_m$. $\theta_{m,4}$ represents a direction of incidence whose standard deviation is higher by 2.1 than the standard deviation of the direction of incidence $\mu_m$.

The direction estimation processing unit 24b acquires the probability distribution $a_m(\theta_m,\mu_m,\sigma_m^2)$ or the probability distribution $a_m(\theta_m,\mu_m,\kappa_m)$ from the distribution function calculation unit 24a.

The direction estimation processing unit 24b identifies the direction of incidence $\theta_m$ corresponding to the maximum value of the presence probabilities in the probability distribution $a_m(\theta_m,\mu_m,\sigma_m^2)$ or the probability distribution $a_m(\theta_m,\mu_m,r_m)$.

The direction estimation processing unit 24b selects any one of the M directions of incidence $\theta_1$ to $\theta_M$ as the direction in which the wave source is located.

Specifically, in a case where the distribution of reception power levels $P_k$ represented by the distribution function $f_m(\phi_m)$ is a normal distribution $p_N(\theta;\mu,\sigma^2)$ or a Laplace distribution $p_L(\theta;\mu,\sigma^2)$, the direction estimation processing unit 24b searches for a combination of $\mu$ and $\sigma^2$ that minimizes the difference between the angle profile $\phi_m$ and a probability distribution $a(\theta,\mu,\sigma^2)$ as represented by the following Formula (13).

In a case where the distribution of the reception power levels $P_k$ represented by the distribution function $f_m(\phi_m)$ is a von Mises distribution $p_V(\theta;\mu,\kappa)$, the direction estimation processing unit 24b searches for a combination of $\mu$ and $\kappa$ that minimizes the difference between the angle profile $\phi_m$ and a probability distribution $a(\theta,\mu,\kappa)$ as represented by the following Formula (14).

$$\min_{\mu,\sigma^2}\|a_m(\theta_m,\mu_m,\sigma_m^2) - \phi_m\|_2^2 \qquad (1\,3)$$

$$\min_{\mu,\kappa}\|a_m(\theta_m,\mu_m,\kappa_m) - \phi_m\|_2^2 \qquad (1\,4)$$

In a case where the distribution of the reception power levels $P_k$ represented by the distribution function $f_m(\phi_m)$ is the normal distribution $p_N(\theta;\mu,\sigma^2)$ or the Laplace distribution $p_L(\theta;\mu,\sigma^2)$, the direction estimation processing unit 24b selects $\mu_m$ that minimizes Formula (13) from among M $\mu_1$ to $\mu_M$.

In a case where the distribution of the reception power levels $P_k$ represented by the distribution function $f(\phi)$ is the von Mises distribution $p_V(\theta;\mu,\kappa)$, the direction estimation processing unit 24b selects $\mu_m$ that minimizes Formula (14) from among M $\mu_1$ to $\mu_M$.

The direction estimation processing unit 24b outputs selected $\mu_m$ as a result of estimation of the direction in which the wave source 1 is located to an external apparatus, for example.

In the second embodiment described above, the distribution function calculation unit 24a calculates a plurality of normalized angle profiles from an angle profile calculated by the profile calculation unit 22 by normalizing the reception power levels of respective radio waves included in the angle profile using each of a plurality of mutually different power levels. Then, the distribution function calculation unit 24a calculates distribution functions representing the distributions of the reception power levels of the respective radio waves included in the respective normalized angle profiles in relation to the directions of incidence of the respective radio waves, and calculates, from each of the distribution functions, a probability distribution representing the respective presence probabilities of a plurality of radio waves whose directions of incidence on the antenna 11 are mutually different. The wave source location direction estimation apparatus 3 illustrated in FIG. 8 is configured in such a manner that the direction estimation processing unit 24b identifies the direction of incidence corresponding to the maximum value of the presence probabilities in each of the probability distributions calculated by the distribution function calculation unit 24a, and selects any one of a plurality of the identified directions of incidence as the direction in which the wave source 1 is located. Accordingly, similarly to the wave source location direction estimation apparatus 3 illustrated in FIG. 2, the wave source location direction estimation apparatus 3 illustrated in FIG. 8 can estimate the direction in which the wave source 1 is located on the basis of a reception signal of the one antenna 11, and, in addition to this, can enhance the precision of the estimation of the direction in which the wave source 1 is located as compared to the wave source location direction estimation apparatus 3 illustrated in FIG. 2.

Third Embodiment.

A wave source location direction estimation apparatus 3 explained in a third embodiment includes a profile removal unit 25.

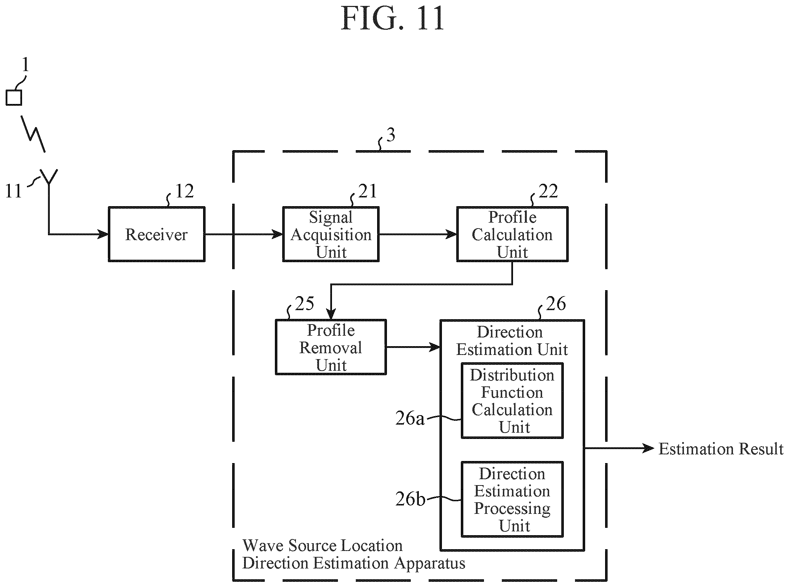

FIG. 11 is a configuration diagram illustrating the wave source location direction estimation apparatus 3 according to the third embodiment. Reference signs in FIG. 11 that are identical to those in FIG. 2 and FIG. 8 denote identical or equivalent portions, and accordingly detailed explanation thereof is omitted.

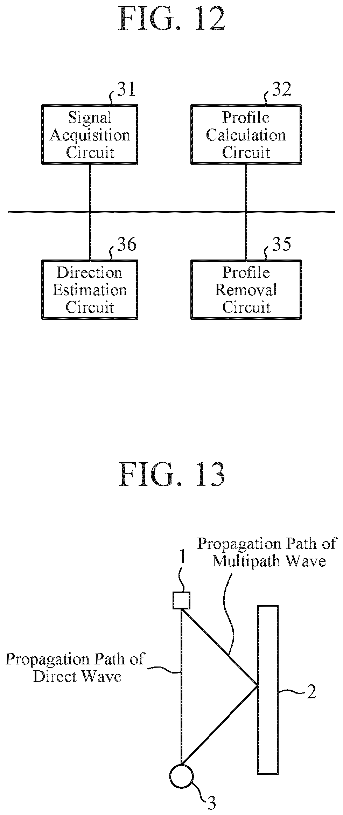

FIG. 12 is a hardware configuration diagram illustrating hardware of the wave source location direction estimation apparatus 3 according to the third embodiment. Reference signs in FIG. 12 that are identical to those in FIG. 3 and FIG. 9 denote identical or equivalent portions, and accordingly detailed explanation thereof is omitted.

The wave source location direction estimation apparatus 3 illustrated in FIG. 11 includes a signal acquisition unit 21, a profile calculation unit 22, the profile removal unit 25, and a direction estimation unit 26.

For example, the profile removal unit 25 is implemented using a profile removal circuit 35 illustrated in FIG. 12.

On the basis of the times of reception of respective radio waves by an antenna 11, the profile removal unit 25 performs a removal process of removing the directions of incidence and reception power levels of some radio waves included in an angle profile $\phi$ calculated by the profile calculation unit 22.

The profile removal unit 25 outputs an angle profile $\phi'$ after the removal process to the direction estimation unit 26.

For example, the direction estimation unit 26 is implemented using a direction estimation circuit 36 illustrated in FIG. 3.

The direction estimation unit 26 includes a distribution function calculation unit 26a and a direction estimation processing unit 26b.

The direction estimation unit 26 acquires the angle profile $\phi'$ after the removal process from the profile removal unit 25.

On the basis of the angle profile $\phi'$ after the removal process, the direction estimation unit 26 estimates the direction in which a wave source 1 is located.

The direction estimation unit 26 outputs a result of the estimation of the direction in which the wave source 1 is located to an external apparatus, for example.

The distribution function calculation unit 26a acquires the angle profile $\phi'$ after the removal process from the profile removal unit 25.

The distribution function calculation unit 26a calculates, as a distribution function corresponding to the angle profile $\phi'$ after the removal process, a distribution function representing the distribution of the reception power levels of the respective radio waves included in the angle profile $\phi'$ after the removal process in relation to the directions of incidence of the respective radio waves.

The direction estimation processing unit 26b identifies, as the direction in which the wave source 1 is located, the direction of incidence corresponding to the maximum value of the reception power levels in the distribution function calculated by the distribution function calculation unit 26a.

The wave source location direction estimation apparatus 3 illustrated in FIG. 11 is one obtained by applying the profile removal unit 25 and the direction estimation unit 26 to the wave source location direction estimation apparatus 3 illustrated in FIG. 2. However, this is merely an example. The wave source location direction estimation apparatus 3 illustrated in FIG. 11 may be one obtained by applying the profile removal unit 25 and the direction estimation unit 26 to the wave source location direction estimation apparatus 3 illustrated in FIG. 8.

It is assumed in FIG. 11 that each of the signal acquisition unit 21, the profile calculation unit 22, the profile removal unit 25, and the direction estimation unit 26 which are constituent elements of the wave source location direction estimation apparatus 3 is implemented using dedicated hardware illustrated in FIG. 12. That is, it is assumed that the wave source location direction estimation apparatus 3 is implemented using a signal acquisition circuit 31, a profile calculation circuit 32, the profile removal circuit 35, and the direction estimation circuit 36.

For example, each of the signal acquisition circuit 31, the profile calculation circuit 32, the profile removal circuit 35, and the direction estimation circuit 36 is equivalent to a single circuit, a composite circuit, a programmed processor, a parallel-programmed processor, an ASIC, an FPGA, or a combination of these.

The constituent elements of the wave source location direction estimation apparatus 3 illustrated in FIG. 11 are not limited to those implemented using dedicated hardware, but the wave source location direction estimation apparatus 3 may be implemented using software, firmware, or a combination of software and firmware.

In a case where the wave source location direction estimation apparatus 3 is implemented using software, firmware, or the like, a program for causing a computer to execute a processing procedure performed in each of the signal acquisition unit 21, the profile calculation unit 22, the profile removal unit 25, and the direction estimation unit 26 is stored on the memory 41 illustrated in FIG. 4. Then, the processor 42 illustrated in FIG. 4 executes the programs stored on the memory 41.

In addition, FIG. 12 illustrates an example in which each of the constituent elements of the wave source location direction estimation apparatus 3 is implemented using dedicated hardware, and FIG. 4 illustrates an example in which the wave source location direction estimation apparatus 3 is implemented using software, firmware, or the like. However, these are merely examples. Some constituent elements of the wave source location direction estimation apparatus 3 may be implemented using dedicated hardware, and the remaining constituent elements may be implemented using software, firmware, or the like.

Next, an operation performed by the wave source location direction estimation apparatus 3 illustrated in FIG. 11 is explained. It should be noted that since constituent elements other than the profile removal unit 25 and the direction estimation unit 26 are similar to those of the wave source location direction estimation apparatus 3 illustrated in FIG. 2, only operations performed by the profile removal unit 25 and the direction estimation unit 26 are explained here.

FIG. 13 is an explanatory diagram illustrating the propagation path of a direct wave and the propagation path of a multipath wave.

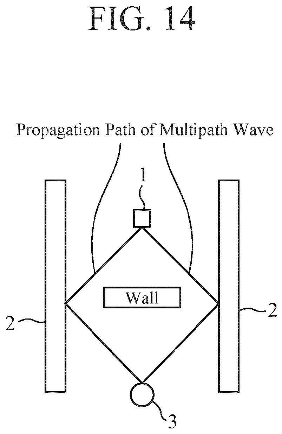

FIG. 14 is an explanatory diagram illustrating the propagation paths of two multipath waves.

The length of the propagation path of the multipath wave is longer than the length of the propagation path of the direct wave as illustrated in FIG. 13. The time of reception of the multipath wave is later than the time of reception of the direct wave on the basis of the length difference between both the propagation paths.

On the other hand, the length difference between the propagation paths of the two multipath waves is often small as illustrated in FIG. 14. Because of this, the time difference between the times of reception of the two multipath waves is often smaller than the time difference between the time of reception of the direct wave and the time of reception of the multipath wave.

The profile removal unit 25 acquires the angle profile $\phi$ from the profile calculation unit 22.

The profile removal unit 25 calculates the delay difference among K radio waves included in the angle profile $\phi$ whose directions of incidence are $\theta_1$ to $\theta_K$.

Specifically, the profile removal unit 25 identifies the time of reception of a radio wave in the K radio waves that has been received earliest by the antenna 11. For convenience of explanation, it is assumed here that the earliest-received radio wave is a radio wave whose direction of incidence is $\theta_1$, and the time of reception of the radio wave is $t_1$. Since the length of the propagation path of a direct wave is shorter than the lengths of the propagation paths of multipath waves, the earliest-received radio wave is likely to be the direct wave.

The profile removal unit 25 calculates the delay time differences $\Delta t_2$ to $\Delta t_K$ of the times of reception $t_2$ to $t_K$ of the remaining (K-1) radio waves from the time of reception $t_1$ of the earliest-received radio wave. Since a process of calculating the delay time differences $\Delta t_2$ to $\Delta t_K$ itself is a known technology, detailed explanation thereof is omitted.

The profile removal unit 25 compares the delay time differences $\Delta t_k$ (k = 2, $\cdots$, K) and a time threshold th. The time threshold th may be stored on an internal memory of the profile removal unit 25, or may be given from the outside of the wave source location direction estimation apparatus 3 illustrated in FIG. 11.

The profile removal unit 25 identifies a radio wave whose delay time difference $\Delta t_k$ is greater than the time threshold th from among the remaining (K-1) radio waves.

The profile removal unit 25 performs a removal process of removing, from the angle profile $\phi$, the direction of incidence $\theta_k$ and reception power level $P_k$ of the radio wave whose delay time difference $\Delta t_k$ is greater than the time threshold th.

The profile removal unit 25 outputs the angle profile $\phi'$ after the removal process to the direction estimation unit 26.

The distribution function calculation unit 26a of the direction estimation unit 26 acquires the angle profile $\phi'$ after the removal process from the profile removal unit 25.

In a case where the number of the directions of incidence $\theta_k$ included in the angle profile $\phi'$ after the removal process is one because the number of radio waves received by the antenna 11 is one, the distribution function calculation unit 26a identifies a direction of incidence $\theta_1$ included in the angle profile $\phi'$ as the direction in which the wave source 1 is located.

In a case where the number of the directions of incidence $\theta_k$ included in the angle profile $\phi'$ after the removal process is greater than one because the number of radio waves received by the antenna 11 is greater than one, the distribution function calculation unit 26a calculates, as a distribution function f($\phi$) corresponding to the angle profile $\phi'$, a distribution function f($\phi$) representing the distribution of the reception power levels $P_k$ of the respective radio waves included in the angle profile $\phi'$ in relation to the directions of incidence $\theta_k$ of the respective radio waves.

As the distribution of the reception power levels $P_k$ represented by the distribution function f($\phi$), for example, the normal distribution $p_N(\theta;\mu,\sigma^2)$ represented by Formula (2), the Laplace distribution $p_L(\theta;\mu,\sigma^2)$ represented by Formula (3), or the von Mises distribution $p_V(\theta;\mu,\kappa)$ represented by Formula (4) can be used.

Similarly to the distribution function calculation unit 23a illustrated in FIG. 2, the distribution function calculation unit 26a calculates, from the distribution function f($\phi$), a probability distribution a($\theta,\mu,\sigma^2$) or a probability distribution a($\theta,\mu,\kappa$) representing the respective presence probabilities of a plurality of radio waves whose directions of incidence on the antenna 11 are mutually different.

Similarly to the direction estimation processing unit 23b illustrated in FIG. 2, the direction estimation processing unit 26b identifies, as the direction in which the wave source 1 is located, the direction of incidence $\mu$ corresponding to the maximum value of the presence probabilities in the probability distribution a($\theta,\mu,\sigma^2$) or the probability distribution a($\theta,\mu,\kappa$) calculated by the distribution function calculation unit 26a.

As a result of estimation of the direction in which the wave source 1 is located, the direction estimation processing unit 26b outputs the direction of incidence $\mu$ corresponding to the maximum value or the direction of incidence $\theta_1$, which is the direction identified by the distribution function calculation unit 26a, to an external apparatus, for example.

In the third embodiment described above, the wave source location direction estimation apparatus 3 illustrated in FIG. 11 includes the profile removal unit 25 to perform a removal process of removing the directions of incidence and reception power levels of some radio waves included in the angle profile calculated by the profile calculation unit 22 on the basis of the times of reception of the respective radio waves by the antenna 11, and the direction estimation unit 26 estimates the direction in which the wave source 1 is located on the basis of the angle profile after the removal process performed by the profile removal unit 25. Accordingly, similarly to the wave source location direction estimation apparatus 3 illustrated in FIG. 2, the wave source location direction estimation apparatus 3 illustrated in FIG. 11 can estimate the direction in which the wave source 1 is located on the basis of a reception signal of the one antenna 11, and, in addition to this, can reduce processes of calculating probability distributions and the like as compared to the wave source location direction estimation apparatus 3 illustrated in FIG. 2.

Fourth Embodiment.

A wave source location direction estimation apparatus 3 explained in a fourth embodiment can estimate the direction in which each of a plurality of wave sources emitting radio waves is located.

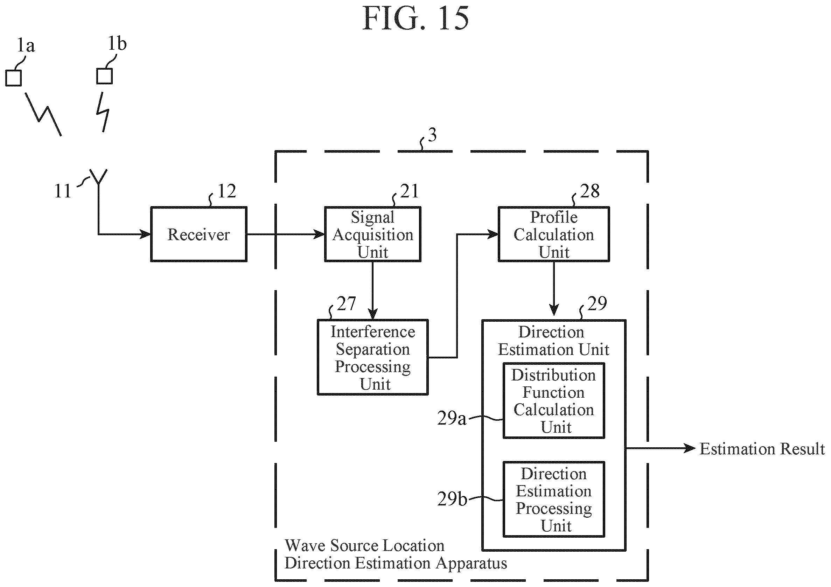

FIG. 15 is a configuration diagram illustrating the wave source location direction estimation apparatus 3 according to the fourth embodiment. Reference signs in FIG. 15 that are identical to those in FIG. 2, FIG. 8, and FIG. 11 denote identical or equivalent portions, and accordingly detailed explanation thereof is omitted.

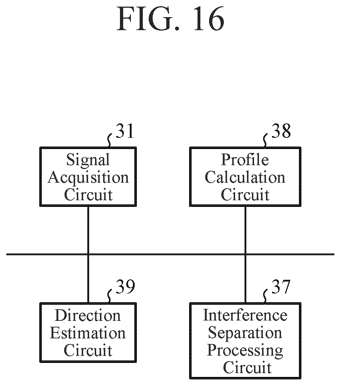

FIG. 16 is a hardware configuration diagram illustrating hardware of the wave source location direction estimation apparatus 3 according to the fourth embodiment. Reference signs in FIG. 16 that are identical to those in FIG. 3, FIG. 9, and FIG. 12 denote identical or equivalent portions, and accordingly detailed explanation thereof is omitted.

The wave source location direction estimation apparatus 3 illustrated in FIG. 15 includes a signal acquisition unit 21, an interference separation processing unit 27, a profile calculation unit 28, and a direction estimation unit 29.

In an example to be explained, for simplification of the explanation, regarding the wave source location direction estimation apparatus 3 illustrated in FIG. 15, there are two wave sources 1a and 1b as wave sources 1 emitting radio waves. It should be noted that this is merely an example, and there may be three or more wave sources.

For example, the interference separation processing unit 27 is implemented using an interference separation processing circuit 37 illustrated in FIG. 16.

The interference separation processing unit 27 acquires reception data from the signal acquisition unit 21.

The interference separation processing unit 27 separates the reception data acquired from the signal acquisition unit 21 into reception data of radio waves from the wave source 1a and reception data of radio waves from the wave source 1b.

The interference separation processing unit 27 outputs, to the profile calculation unit 28, the reception data of the radio waves from the wave source 1a and the reception data of the radio waves from the wave source 1b.

For example, the profile calculation unit 28 is implemented using a profile calculation circuit 38 illustrated in FIG. 16.

The profile calculation unit 28 acquires, from the interference separation processing unit 27, the reception data of the radio waves from the wave source 1a and the reception data of the radio waves from the wave source 1b.

On the basis of the reception data of the radio waves from the wave source 1a, the profile calculation unit 28 calculates an angle profile $\phi_{1a}$ including the directions of incidence of the respective radio waves on the antenna 11, and the reception power levels of the respective radio waves.

In addition, on the basis of the reception data of the radio waves from the wave source 1b, the profile calculation unit 28 calculates an angle profile $\phi_{1b}$ including the directions of incidence of the respective radio waves on the antenna 11, and the reception power levels of the respective radio waves.

The profile calculation unit 28 outputs the angle profiles $\phi_{1a}$ and $\phi_{1b}$ to the direction estimation unit 29.

For example, the direction estimation unit 29 is implemented using a direction estimation circuit 39 illustrated in FIG. 16.

The direction estimation unit 29 includes a distribution function calculation unit 29a and a direction estimation processing unit 29b.

The direction estimation unit 29 acquires the angle profiles $\phi_{1a}$ and $\phi_{1b}$ from the profile calculation unit 28.

On the basis of the angle profile $\phi_{1a}$, the direction estimation unit 29 estimates the direction in which the wave source 1a is located.

On the basis of the angle profile $\phi_{1b}$, the direction estimation unit 29 estimates the direction in which the wave source 1b is located.

The direction estimation unit 29 outputs a result of the estimation of the direction in which each of the wave sources 1a and 1b is located to an external apparatus, for example.

The distribution function calculation unit 29a acquires the angle profiles $\phi_{1a}$ and $\phi_{1b}$ from the profile calculation unit 28.

The distribution function calculation unit 29a calculates, as a distribution function corresponding to the angle

profile $\phi_{1a}$, a distribution function representing the distribution of the reception power levels of the respective radio waves included in the angle profile $\phi_{1a}$ in relation to the directions of incidence of the respective radio waves.

The distribution function calculation unit 29a calculates, as a distribution function corresponding to the angle profile $\phi_{1b}$, a distribution function representing the distribution of the reception power levels of the respective radio waves included in the angle profile $\phi_{1b}$ in relation to the directions of incidence of the respective radio waves.

The direction estimation processing unit 29b identifies, as the direction in which the wave source 1a is located, the direction of incidence corresponding to the maximum value of the reception power levels in the distribution function calculated by the distribution function calculation unit 29a.

The direction estimation processing unit 29b identifies, as the direction in which the wave source 1b is located, the direction of incidence corresponding to the maximum value of the reception power levels in the distribution function calculated by the distribution function calculation unit 29a.

The wave source location direction estimation apparatus 3 illustrated in FIG. 15 is one obtained by applying the interference separation processing unit 27, the profile calculation unit 28, and the direction estimation unit 29 to the wave source location direction estimation apparatus 3 illustrated in FIG. 2. However, this is merely an example. The wave source location direction estimation apparatus 3 illustrated in FIG. 15 may be one obtained by applying the interference separation processing unit 27, the profile calculation unit 28, and the direction estimation unit 29 to the wave source location direction estimation apparatus 3 illustrated in FIG. 8 or to the wave source location direction estimation apparatus 3 illustrated in FIG. 11.

It is assumed in FIG. 15 that each of the signal acquisition unit 21, the interference separation processing unit 27, the profile calculation unit 28, and the direction estimation unit 29 which are constituent elements of the wave source location direction estimation apparatus 3 is implemented using dedicated hardware illustrated in FIG. 16. That is, it is assumed that the wave source location direction estimation apparatus 3 is implemented using a signal acquisition circuit 31, the interference separation processing circuit 37, the profile calculation circuit 38, and the direction estimation circuit 39.

For example, each of the signal acquisition circuit 31, the interference separation processing circuit 37, the profile calculation circuit 38, and the direction estimation circuit 39 is equivalent to a single circuit, a composite circuit, a programmed processor, a parallel-programmed processor, an ASIC, an FPGA, or a combination of these.

The constituent elements of the wave source location direction estimation apparatus 3 illustrated in FIG. 15 are not limited to those implemented using dedicated hardware, but the wave source location direction estimation apparatus 3 may be implemented using software, firmware, or a combination of software and firmware.

In a case where the wave source location direction estimation apparatus 3 is implemented using software, firmware, or the like, a program for causing a computer to execute a processing procedure performed in each of the signal acquisition unit 21, the interference separation processing unit 27, the profile calculation unit 28, and the direction estimation unit 29 is stored on the memory 41 illustrated in FIG. 4. Then, the processor 42 illustrated in FIG. 4 executes the programs stored on the memory 41.

In addition, FIG. 16 illustrates an example in which each of the constituent elements of the wave source location direction estimation apparatus 3 is implemented using dedicated hardware, and FIG. 4 illustrates an example in which the wave source location direction estimation apparatus 3 is implemented using software, firmware, or the like. However, these are merely examples. Some constituent elements of the wave source location direction estimation apparatus 3 may be implemented using dedicated hardware, and the remaining constituent elements may be implemented using software, firmware, or the like.

Next, an operation performed by the wave source location direction estimation apparatus 3 illustrated in FIG. 15 is explained.

Regarding the wave source location direction estimation apparatus 3 illustrated in FIG. 15, direct waves or multipath waves come to the antenna 11 as radio waves from the wave source 1a, and direct waves or multipath waves come to the antenna 11 as radio waves from the wave source 1b. It is assumed that the number of radio waves that come to the antenna 11 from the wave source 1a is G, and the number of radio waves that come to the antenna 11 from the wave source 1b is H. Each of G and H is an integer equal to or greater than one.

The antenna 11 receives the radio waves from the wave source 1a and the radio waves from the wave source 1b, and outputs a reception signal of the radio waves to a receiver 12.

The receiver 12 demodulates the reception signal output from the antenna 11, and converts the demodulated reception signal, which is an analog signal, into reception data, which is a digital signal.

The receiver 12 outputs the reception data to the wave source location direction estimation apparatus 3.

The signal acquisition unit 21 of the wave source location direction estimation apparatus 3 acquires the reception data from the receiver 12.

The signal acquisition unit 21 outputs the reception data to the interference separation processing unit 27.

The interference separation processing unit 27 acquires the reception data from the signal acquisition unit 21.

For example, the interference separation processing unit 27 converts the reception data into a frequency-domain signal by performing the Fourier transform on the reception data. The frequency-domain signal includes a signal of the radio waves from the wave source 1a and a signal of the radio waves from the wave source 1b. The frequency of the signal of the radio waves from the wave source 1a and the frequency of the signal of the radio waves from the wave source 1b are mutually different.

On the basis of the difference between the frequencies, the interference separation processing unit 27 separates the frequency-domain signal into a frequency-domain signal related to the wave source 1a and a frequency-domain signal related to the wave source 1b.

For example, the interference separation processing unit 27 calculates reception data Ra related to the wave source 1a by performing the inverse Fourier transform on the frequency-domain signal related to the wave source 1a.

In addition, for example, the interference separation processing unit 27 calculates reception data Rb related to the wave source 1b by performing the inverse Fourier transform on the frequency-domain signal related to the wave source 1b.

The interference separation processing unit 27 outputs, to the profile calculation unit 28, the reception data Ra related to the wave source 1a and the reception data Rb related to the wave source 1b.

The profile calculation unit 28 acquires, from the interference separation processing unit 27, the reception data Ra related to the wave source 1a and the reception data Rb related to the wave source 1b.

On the basis of the reception data Ra related to the wave source 1a, the profile calculation unit 28 estimates the directions of incidence $\theta_{1a,g}$ of respective radio waves from the wave source 1a on the antenna 11. g = 1, $\cdots$, G.

The profile calculation unit 28 identifies, as the reception power levels $P_{1a,g}$ of the respective radio waves from the wave source 1a, the signal strengths of the respective radio waves in the directions of incidence $\theta_{1a,g}$.

As represented by the following Formula (15), the profile calculation unit 28 outputs, to the direction estimation unit 29, the angle profile $\phi_{1a}$ including the directions of incidence $\theta_{1a,g}$ (g = 1, $\cdots$, G) of the respective radio waves and the reception power levels $P_{1a,g}$ of the respective radio waves.

$$\phi_{1a} = f(\theta_{1a,1},\cdots,\theta_{1a,G},P_{1a,1},\cdots,P_{1a,G}) \quad (15)$$

On the basis of the reception data Rb related to the wave source 1b, the profile calculation unit 28 estimates the directions of incidence $\theta_{1b,h}$ of respective radio waves from the wave source 1b on the antenna 11. h = 1, $\cdots$, H.

The profile calculation unit 28 identifies, as the reception power levels $P_{1b,h}$ of the respective radio waves from the wave source 1b, the signal strengths of the respective radio waves in the directions of incidence $\theta_{1b,h}$.

As represented by the following Formula (16), the profile calculation unit 28 outputs, to the direction estimation unit 29, the angle profile $\phi_{1b}$ including the directions of incidence $\theta_{1b,h}$ (h = 1, $\cdots$, H) of the respective radio waves and the reception power levels $P_{1b,h}$ of the respective radio waves.

$$\phi_{1b} = f(\theta_{1b,1},\cdots,\theta_{1b,H},P_{1b,1},\cdots,P_{1b,H}) \quad (16)$$

The distribution function calculation unit 29a of the direction estimation unit 29 acquires the angle profiles $\phi_{1a}$ and $\phi_{1b}$ from the profile calculation unit 28.

In a case where the number of the directions of incidence $\theta_{1a,1}$ included in the angle profile $\phi_{1a}$ is one because the number of radio waves from the wave source 1a received by the antenna 11 is one, the distribution function calculation unit 29a identifies a direction of incidence $\theta_{1a,g}$ included in the angle profile $\phi_{1a}$ as the direction in which the wave source 1a is located.

In a case where the number of the directions of incidence $\theta_{1a,g}$ included in the angle profile $\phi_{1a}$ is greater than one because the number of radio waves from the wave source 1a received by the antenna 11 is greater than one, the distribution function calculation unit 29a calculates a distribution function $f(\phi_{1a})$ corresponding to the angle profile $\phi_{1a}$.

That is, the distribution function calculation unit 29a calculates the distribution function $f(\phi_{1a})$ representing the distribution of the reception power levels $P_{1a,g}$ of the respective radio waves included in the angle profile $\phi_{1a}$ in relation to the directions of incidence $\theta_{1a,g}$ of the respective radio waves.

In addition, in a case where the number of the directions of incidence $\theta_{1b,1}$ included in the angle profile $\phi_{1b}$ is one because the number of radio waves from the wave source 1b received by the antenna 11 is one, the distribution function calculation unit 29a identifies a direction of incidence $\theta_{1b,h}$ included in the angle profile $\phi_{1b}$ as the direction in which the wave source 1b is located.

In a case where the number of the directions of incidence $\theta_{1b,h}$ included in the angle profile $\phi_{1b}$ is greater than one because the number of radio waves from the wave source 1b received by the antenna 11 is greater than one, the distribution function calculation unit 29a calculates a distribution function $f(\phi_{1b})$ corresponding to the angle profile $\phi_{1b}$.

That is, the distribution function calculation unit 29a calculates the distribution function $f(\phi_{1b})$ representing the distribution of the reception power levels $P_{1b,h}$ of the respective radio waves included in the angle profile $\phi_{1b}$ in relation to the directions of incidence $\theta_{1b,h}$ of the respective radio waves.

As the reception power level $P_{1a,g}$ represented by the distribution function $f(\phi_{1a})$ and the reception power level $P_{1b,h}$ represented by the distribution function $f(\phi_{1b})$, for example, the normal distribution $p_N(\theta;\mu,\sigma^2)$ represented by Formula (2), the Laplace distribution $p_L(\theta;\mu,\sigma^2)$ represented by Formula (3), or the von Mises distribution $p_V(\theta;\mu,\kappa)$ represented by Formula (4) can be used.

The distribution function calculation unit 29a calculates, from the distribution function $f(\phi_{1a})$, a probability distribution $a_{1a}(\theta,\mu,\sigma^2)$ representing the respective presence probabilities of the G radio waves whose directions of incidence on the antenna 11 are mutually different.

In a case where the distribution of the reception power levels $P_{1a,g}$ represented by the distribution function $f(\phi_{1a})$ is the normal distribution $p_N(\theta;\mu,\sigma^2)$, the probability distribution $a_{1a}(\theta,\mu,\sigma^2)$ is represented by the following Formula (17).

In a case where the distribution of the reception power levels $P_{1a,g}$ represented by the distribution function $f(\phi_{1a})$ is the Laplace distribution $p_L(\theta;\mu,\sigma^2)$, the probability distribution $a_{1a}(\theta,\mu,\sigma^2)$ is represented by the following Formula (18).

In addition, in a case where the distribution of the reception power levels $P_{1a,g}$ represented by the distribution function $f(\phi_{1a})$ is the von Mises distribution $p_V(\theta;\mu,\kappa)$, a probability distribution $a_{1a}(\theta,\mu,\kappa)$ is represented by the following Formula (19).

$$a_{1a}(\theta,\mu,\sigma^2) = f([p_N(\theta_1;\mu,\sigma^2) \quad \cdots \quad p_N(\theta_G;\mu,\sigma^2)]^T) \qquad (17)$$

$$a_{1a}(\theta,\mu,\sigma^2) = f([p_L(\theta_1;\mu,\sigma^2) \quad \cdots \quad p_L(\theta_G;\mu,\sigma^2)]^T) \qquad (18)$$

$$a_{1a}(\theta,\mu,\kappa) = f([p_V(\theta_1;\mu,\kappa) \quad \cdots \quad p_V(\theta_G;\mu,\kappa)]^T) \qquad (19)$$

The distribution function calculation unit 29a calculates, from the distribution function $f(\phi_{1b})$, a probability distribution $a_{1b}(\theta,\mu,\sigma^2)$ representing the respective presence probabilities of the H radio waves whose directions of incidence on the antenna 11 are mutually different.

In a case where the distribution of the reception power levels $P_{1b,h}$ represented by the distribution function $f(\phi_{1b})$ is the normal distribution $p_N(\theta;\mu,\sigma^2)$, the probability distribution $a_{1b}(\theta,\mu,\sigma^2)$ is represented by the following Formula (20).

In a case where the distribution of the reception power levels $P_{1b,h}$ represented by the distribution function $f(\phi_{1b})$ is the Laplace distribution $p_L(\theta;\mu,\sigma^2)$, the probability distribution $a_{1b}(\theta,\mu,\sigma^2)$ is represented by the following Formula (21).

In addition, in a case where the distribution of the reception power levels $P_{1b,h}$ represented by the distribution function $f(\phi_{1b})$ is the von Mises distribution $p_V(\theta;\mu,\kappa)$, a probability distribution $a_{1b}(\theta,\mu,\kappa)$ is represented by the following Formula (22).

$$a_{1b}(\theta,\mu,\sigma^2) = f([p_N(\theta_1;\mu,\sigma^2) \quad \cdots \quad p_N(\theta_H;\mu,\sigma^2)]^T) \qquad (20)$$

$$a_{1b}(\theta,\mu,\sigma^2) = f([p_L(\theta_1;\mu,\sigma^2) \quad \cdots \quad p_L(\theta_H;\mu,\sigma^2)]^T) \qquad (21)$$

$$a_{1b}(\theta,\mu,\kappa) = f([p_V(\theta_1;\mu,\kappa) \quad \cdots \quad p_V(\theta_H;\mu,\kappa)]^T) \qquad (22)$$

The direction estimation processing unit 29b identifies, as the direction in which the wave source 1a is located, the direction of incidence corresponding to the maximum value of the presence probabilities in the probability distribution $a_{1a}(\theta,\mu,\sigma^2)$ or the probability distribution $a_{1a}(\theta,\mu,\kappa)$ calculated by the distribution function calculation unit 29a.

The direction estimation processing unit 29b identifies, as the direction in which the wave source 1b is located, the direction of incidence corresponding to the maximum value of the presence probabilities in the probability distribution $a_{1b}(\theta,\mu,\sigma^2)$ or the probability distribution $a_{1b}(\theta,\mu,\kappa)$ calculated by the distribution function calculation unit 29a.

Hereinafter, a process of estimating a location direction performed by the direction estimation processing unit 29b is explained specifically.

In a case where the distribution of the reception power levels $P_{1a,g}$ represented by the distribution function $f(\phi_{1a})$ is the normal distribution $p_N(\theta;\mu,\sigma^2)$ or the Laplace distribution $p_L(\theta;\mu,\sigma^2)$, the direction estimation processing unit 29b searches for a combination of $\mu$ and $\sigma^2$ that minimizes the difference between the angle profile $\phi_{1a}$ and the probability distribution $a_{1a}(\theta,\mu,\sigma^2)$ as represented by the following Formula (23).

In a case where the distribution of the reception power levels $P_{1a,g}$ represented by the distribution function $f(\phi_{1a})$ is the von Mises distribution $p_V(\theta;\mu,\kappa)$, the direction estimation processing unit 29b searches for a combination of $\mu$ and $\kappa$ that minimizes the difference between the angle profile $\phi_{1a}$ and the probability distribution $a_{1a}(\theta,\mu,\kappa)$ as represented by the following Formula (24).

As a result of estimation of the direction in which the wave source 1a is located, the direction estimation processing unit 29b outputs the direction of incidence $\mu$ corresponding to the maximum value or the direction of incidence $\theta_{1a,1}$, which is the direction identified by the distribution function calculation unit 29a, to an external apparatus, for example.

$$\min_{\mu,\sigma^2}\|a_{1a}(\theta,\mu,\sigma^2)-\phi_{1a}\|_2^2 \qquad (23)$$

$$\min_{\mu,\kappa}\|a_{1a}(\theta,\mu,\kappa)-\phi_{1a}\|_2^2 \qquad (24)$$

In a case where the distribution of the reception power levels $P_{1b,h}$ represented by the distribution function $f(\phi_{1b})$ is the normal distribution $p_N(\theta;\mu,\sigma^2)$ or the Laplace distribution $p_L(\theta;\mu,\sigma^2)$, the direction estimation processing unit 29b searches for a combination of $\mu$ and $\sigma^2$ that minimizes the difference between the angle profile $\phi_{1b}$ and the probability distribution $a_{1b}(\theta,\mu,\sigma^2)$ as represented by the following Formula (25).

In a case where the distribution of the reception power levels $P_{1b,h}$ represented by the distribution function $f(\phi_{1b})$ is the von Mises distribution $p_V(\theta;\mu,\kappa)$, the direction estimation processing unit 29b searches for a combination of $\mu$ and $\kappa$ that minimizes the difference between the angle profile $\phi_{1b}$ and the probability distribution $a_{1b}(\theta,\mu,\kappa)$ as represented by the following Formula (26).

As a result of estimation of the direction in which the wave source 1b is located, the direction estimation processing unit 29b outputs the direction of incidence $\mu$ corresponding to the maximum value or the direction of incidence $\theta_{1b,1}$, which is the direction identified by the distribution function calculation unit 29a, to an external apparatus, for example.

$$\min_{\mu,\sigma^2}\|a_{1b}(\theta,\mu,\sigma^2)-\phi_{1b}\|_2^2 \qquad (25)$$

$$\min_{\mu,\kappa}\|a_{1b}(\theta,\mu,\kappa)-\phi_{1b}\|_2^2 \qquad (26)$$

In the fourth embodiment described above, there are a plurality of the wave sources 1a and 1b emitting radio waves, and the wave source location direction estimation apparatus 3 illustrated in FIG. 15 includes the interference separation processing unit 27 to separate a reception signal acquired by the signal acquisition unit 21 into reception signals of radio waves from the respective wave sources 1a and 1b, and output the respective separated reception signals. In addition, the profile calculation unit 28 of the wave source location direction estimation apparatus 3 calculates angle profiles including the directions of incidence of the respective radio waves from the respective wave sources 1a and 1b on the antenna 11 and the reception power levels of the respective radio waves on the basis of the respective reception signals output from the interference separation processing unit 27. In addition, the direction estimation unit 29 of the wave source location direction estimation apparatus 3 estimates the directions in which the respective wave sources 1a and 1b are located on the basis of the angle profiles of the respective wave sources 1a and 1b calculated by the profile calculation unit 28. Accordingly, the wave source location direction estimation apparatus 3 illustrated in FIG. 15 can estimate the direction in which each of a plurality of the wave sources 1a and 1b is located on the basis of a reception signal of the one antenna 11.

Note that any combinations of embodiments, modifications of any constituent elements in embodiments, or omissions of any constituent elements in embodiments are possible in the present disclosure.

INDUSTRIAL APPLICABILITY

The present disclosure is suited for a wave source location direction estimation apparatus and a wave source location direction estimation method.

REFERENCE SIGNS LIST

1, 1a, 1b: wave source; 2: structure; 3: wave source location direction estimation apparatus; 11: antenna; 12: receiver; 21: signal acquisition unit; 22: profile calculation unit; 23: direction estimation unit; 23a: distribution function calculation unit; 23b: direction estimation processing unit; 24: direction estimation unit; 24a: distribution function calculation unit; 24b: direction estimation processing unit; 25: profile removal unit; 26: direction estimation unit; 26a: distribution function calculation unit; 26b: direction estimation processing unit; 27: interference separation processing unit; 28: profile calculation unit; 29: direction estimation unit; 29a: distribution function calculation unit; 29b: direction estimation processing unit; 31: signal acquisition circuit; 32: profile calculation circuit; 33: direction estimation circuit; 34: direction estimation circuit; 35: profile removal circuit; 36: direction estimation circuit; 37: interference separation processing circuit; 38: profile calculation circuit; 39: direction estimation circuit; 41: memory; 42: processor

**Claims**

1.   A wave source location direction estimation apparatus comprising:

a signal acquisition unit to acquire a reception signal of one or more radio waves from an antenna to receive the one or more radio waves from among a direct wave which is a radio wave from a wave source and one or more multipath waves which are radio waves from the wave source;
a profile calculation unit to calculate an angle profile including directions of incidence of the respective radio waves on the antenna, and reception power levels of the respective radio waves on a basis of the reception signal acquired by the signal acquisition unit; and
a direction estimation unit to estimate a direction in which the wave source is located on a basis of the angle profile calculated by the profile calculation unit.

2.   The wave source location direction estimation apparatus according to claim 1, wherein
the direction estimation unit includes:

a distribution function calculation unit to calculate, as a distribution function corresponding to the angle profile calculated by the profile calculation unit, a distribution function representing a distribution of the reception power levels of the respective radio waves included in the angle profile in relation to the directions of incidence of the respective radio waves; and
a direction estimation processing unit to identify, as the direction in which the wave source is located, a direction of incidence corresponding to a maximum value of the reception power levels in the distribution function calculated by the distribution function calculation unit.

3.   The wave source location direction estimation apparatus according to claim 2, wherein

the distribution function calculation unit calculates, from the distribution function, a probability distribution representing respective presence probabilities of a plurality of radio waves whose directions of incidence on the antenna are mutually different, and
the direction estimation processing unit identifies, as the direction in which the wave source is located, a direction of incidence corresponding to a maximum value of the presence probabilities represented by the probability distribution calculated by the distribution function calculation unit.

4.   The wave source location direction estimation apparatus according to claim 3, wherein

the distribution function calculation unit calculates a plurality of normalized angle profiles from the angle profile by normalizing the reception power levels of the respective radio waves included in the angle profile calculated by the profile calculation unit using each of a plurality of mutually different power levels, calculates distribution functions representing distributions of the reception power levels of the respective radio waves included in the respective normalized angle profiles in relation to the directions of incidence of the respective radio waves, and calculates, from each of the distribution functions, a probability distribution representing respective presence probabilities of a plurality of radio waves whose directions of incidence on the antenna are mutually different, and
the direction estimation processing unit identifies a direction of incidence corresponding to the maximum value of the presence probabilities in each of the probability distributions calculated by the distribution function calculation unit, and selects any one of a plurality of the identified directions of incidence as the direction in which the wave source is located.

5. The wave source location direction estimation apparatus according to claim 1, comprising a profile removal unit to perform a removal process of removing directions of incidence and reception power levels of some radio waves included in the angle profile calculated by the profile calculation unit on a basis of times of reception of the respective radio waves by the antenna, wherein
the direction estimation unit estimates the direction in which the wave source is located on a basis of the angle profile after the removal process performed by the profile removal unit.

6. The wave source location direction estimation apparatus according to claim 1, wherein

there are a plurality of wave sources emitting radio waves,
the wave source location direction estimation apparatus comprises an interference separation processing unit to separate a reception signal acquired by the signal acquisition unit into reception signals of radio waves from the respective wave sources, and output the respective separated reception signals,
the profile calculation unit calculates angle profiles including directions of incidence of the respective radio waves from the respective wave sources on the antenna and reception power levels of the respective radio waves on a basis of the respective reception signals output from the interference separation processing unit, and
the direction estimation unit estimates directions in which the respective wave sources are located on a basis of the angle profiles of the respective wave sources calculated by the profile calculation unit.

7. A wave source location direction estimation method comprising:

acquiring, by a signal acquisition unit, a reception signal of one or more radio waves from an antenna to receive the one or more radio waves from among a direct wave which is a radio wave from a wave source and one or more multipath waves which are radio waves from the wave source;
calculating, by a profile calculation unit, an angle profile including directions of incidence of the respective radio waves on the antenna, and reception power levels of the respective radio waves on a basis of the reception signal acquired by the signal acquisition unit; and
estimating, by a direction estimation unit, a direction in which the wave source is located on a basis of the angle profile calculated by the profile calculation unit.

FIG. 1

# FIG. 2

Wave Source Location
Direction Estimation Apparatus

FIG. 3

31
Signal
Acquisition
Circuit

32
Profile
Calculation
Circuit

33
Direction
Estimation
Circuit

FIG. 4

41
Memory

42
Processor

# FIG. 5

START

Signal Acquisition Unit
Acquires Reception Data from
Receiver — ST1

Profile Calculation Unit
Estimates Directions of Incidence of
Respective Radio Waves on Antenna — ST2

Profile Calculation Unit
Identifies Reception Power Levels of
Respective Radio Waves — ST3

ST4
Is Number of
Radio Waves One? — NO

YES — ST5

Distribution Function Calculation Unit
Identifies Direction of
Incidence Included in Angle Profile as
Direction in Which Wave Source Is
Located

ST6
Distribution Function
Calculation Unit
Calculates Distribution
Function

ST7
Direction Estimation
Processing Unit
Identifies Direction in
Which Wave Source Is
Located

END

# FIG. 6

Distribution Function F(φ) in
Case Where Difference Is the Minimum

Distribution Function F(φ) in
Case Where Difference Is Large

# FIG. 7

Probability Distribution a $(\theta,\mu,\delta^2)$

Angle Profile $\varphi$

# FIG. 8

EP 4 585 956 A1

# FIG. 9

Signal Acquisition Circuit — 31

Profile Calculation Circuit — 32

Direction Estimation Circuit — 34

# FIG. 10

# FIG. 11

# FIG. 12

| Signal Acquisition Circuit<br>31 | Profile Calculation Circuit<br>32 |
|---|---|

| Direction Estimation Circuit<br>36 | Profile Removal Circuit<br>35 |
|---|---|

# FIG. 13

Propagation Path of Multipath Wave

1

Propagation Path of Direct Wave

2

3

# FIG. 14

Propagation Path of Multipath Wave

FIG. 15

1a

1b

11

EP 4 585 956 A1

32

12
Receiver

3

21
Signal
Acquisition
Unit

28
Profile
Calculation
Unit

27
Interference
Separation
Processing
Unit

29
Direction
Estimation Unit

29a — Distribution
Function
Calculation
Unit

Estimation Result

29b — Direction
Estimation
Processing
Unit

Wave Source Location
Direction Estimation Apparatus

FIG. 16

## INTERNATIONAL SEARCH REPORT

| International application No. |
| --- |
| **PCT/JP2022/044645** |

| A. | CLASSIFICATION OF SUBJECT MATTER |
| --- | --- |

*G01S 3/20*(2006.01)i; *G01S 3/46*(2006.01)i; *H04B 17/27*(2015.01)n
FI:  G01S3/20; G01S3/46; H04B17/27

According to International Patent Classification (IPC) or to both national classification and IPC

| B. | FIELDS SEARCHED |
| --- | --- |

Minimum documentation searched (classification system followed by classification symbols)

G01S1/00-G01S5/30; H04B17/27

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2021-012033 A (RFLOCUS INC.) 04 February 2021 (2021-02-04) | 1, 7 |
| | paragraphs [0021], [0043], [0076] | |
| Y | | 5-6 |
| A | | 2-4 |
| Y | WO 2005/050246 A1 (MITSUBISHI ELECTRIC CORP.) 02 June 2005 (2005-06-02) | 5-6 |
| | p. 22, lines 7-10 | |
| A | JP 2003-139849 A (MITSUBISHI ELECTRIC CORP.) 14 May 2003 (2003-05-14) | 1-7 |
| | entire text, all drawings | |
| A | WO 2019/180831 A1 (HITACHI KOKUSAI ELECTRIC INC.) 26 September 2019 (2019-09-26) | 1-7 |
| | entire text, all drawings | |
| A | WO 2018/174172 A1 (JAPAN AEROSPACE EXPLORATION AGENCY) 27 September 2018 (2018-09-27) | 1-7 |
| | entire text, all drawings | |

☑ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/044645** |

**C.    DOCUMENTS CONSIDERED TO BE RELEVANT**

| Category* | Citation of document, with indication, where appropriate, of the relevant passages | Relevant to claim No. |
|---|---|---|
| A | JP 2003-057325 A (NTT DOCOMO INC.) 26 February 2003 (2003-02-26)<br>entire text, all drawings | 1-7 |

Form PCT/ISA/210 (second sheet) (January 2015)

## INTERNATIONAL SEARCH REPORT
### Information on patent family members

International application No.

**PCT/JP2022/044645**

| Patent document cited in search report | | | Publication date (day/month/year) | Patent family member(s) | | | Publication date (day/month/year) |
|---|---|---|---|---|---|---|---|
| JP | 2021-012033 | A | 04 February 2021 | (Family: none) | | | |
| WO | 2005/050246 | A1 | 02 June 2005 | (Family: none) | | | |
| JP | 2003-139849 | A | 14 May 2003 | (Family: none) | | | |
| WO | 2019/180831 | A1 | 26 September 2019 | US | 2021/0135357 | A1 | |
| WO | 2018/174172 | A1 | 27 September 2018 | US | 2020/0379082 | A1 | |
| JP | 2003-057325 | A | 26 February 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHINICHI MURATA** ; **TAKAHIRO MATSUDA** ; **KENTARO NISHIMORI**. Maximum Likelihood Estimation for Single Wave Source Localization Using Multiple UAVs in NLOS Environments. *The Institute of Electronics, Information and Communication Engineers, The IEICE Transactions B*, March 2022, vol. 3, 220-239